# EUROPÄISCHE PATENTANMELDUNG

(11) **EP 2 811 268 A1**
(43) Veröffentlichungstag der Anmeldung: **10.12.2014**
(21) Anmeldenummer: 14001886.2
(22) Anmeldetag: 30.05.2014
(51) Int. Cl.: G01F 15/00

(54) **Durchflussmesser**

(30) Priorität: 04.06.2013 DE 102013009347
(71) Anmelder: Diehl Metering GmbH, 91522 Ansbach (DE)
(72) Erfinder: Sonnenberg, Hans-Michael, 91522 Ansbach (DE)
(74) Vertreter: Diehl Patentabteilung

(57) **Zusammenfassung**

Durchflussmesser für ein Fluid, umfassend eine Kanaleinheit, die die Kanäle (9, 11, 33) des Durchflussmessers ausbildet, wobei die Kanaleinheit in einem Messbereich mehrere Kanäle (9, 11, 33) aufweist und wenigstens in einem dieser Kanäle (9, 11, 33) wenigs-tens eine Messeinrichtung (12) angeordnet ist, wobei die Kanaleinheit eine Teileinrichtung (4) mit einer oder mehreren Teilstufen zur Aufteilung des in den Durchflussmesser einfließenden Fluids in die Kanäle (9, 11, 33) umfasst, wobei die oder jede Teilstufe we-nigstens ein Stauelement (15) umfasst, das durch einen Einströmkanal (3) einströmendes Fluid in wenigstens zwei Teilkanäle (10) aufteilt, dadurch gekennzeichnet, dass die Teileinrichtung (4) und/oder eine Beschleunigungseinrichtung (8), die in wenigstens einem der Kanäle (9, 11, 33) zwischen Teileinrichtung (4) und Messbereich angeordnet ist, zur Beschleunigung des Fluids ausgebildet ist, derart, dass das Fluid vor der Teileinrichtung (4) eine erste Strömungsgeschwindigkeit aufweist und im Messbereich eine mindestens 1,5-fache, insbesondere mindestens doppelt so hohe, zweite Strömungsgeschwindigkeit.

## Beschreibung

Die Erfindung betrifft einen Durchflussmesser für ein Fluid, umfassend eine Kanaleinheit, die die Kanäle des Durchflussmessers ausbildet, wobei die Kanaleinheit in einem Messbereich mehrere Kanäle aufweist und wenigstens in einem dieser Kanäle wenigstens eine Messeinrichtung angeordnet ist, wobei die Kanaleinheit eine Teileinrichtung mit einer oder mehreren Teilstufen zur Aufteilung des in den Durchflussmesser einfließenden Fluids in die Kanäle umfasst, wobei die oder jede Teilstufe wenigstens ein Stauelement umfasst, das durch einen Einströmkanal einströmendes Fluid in wenigstens zwei Kanäle aufteilt.

Bei Durchflussmessungen von Fluidströmungen ist es häufig vorteilhaft, die Messungen nur an einem Teilstrom durchzuführen, der vom Hauptstrom getrennt wird. Für einige Messprinzipien, beispielsweise beim thermischen Messprinzip oder bei Ultraschallmessungen, sind sogar nur Messungen an einem Teilstrom möglich, wenn höhere Durchflussmengen zu erfassen sind. Durch Messungen an Teilströmungen können Durchflussmesser bezüglich ihrer Durchflussmenge auch flexibler gestaltet werden.

Wichtigstes Merkmal für eine Teilstrommessung ist die Aufteilungsfunktion zwischen Teilstrom und Hauptstrom. Um verlässliche Messwerte zu erhalten, ist es notwendig, dass die Aufteilungsfunktion bekannt ist. Bei bekannten Messsystemen zur Messung eines Teilstroms, wie sie beispielsweise in WO 2004/092687 beschrieben sind, ist zur Bestimmung der Aufteilungsfunktion notwendig, dass bestimmte Größen, wie die Temperatur, die Flusseigenschaften des Mediums und der Druck bekannt sind. Variieren diese Eigenschaften während der Messung, so führt dies zu einer Verfälschung der Messung.

Trotz den Bemühungen, eine gleichmäßige Aufteilung zu bewirken, ist die Abhängigkeit von Temperatur, Strömung und Viskosität des Mediums groß, so dass Zähler dieser Bauart eine aufwändige Kalibrierung benötigen und nur mit vordefinierten Medien betrieben werden können. Bei einigen Substanzen variieren die physikalischen Eigenschaften des Mediums jedoch stark mit der Zusammensetzung des Mediums. Beispielsweise können Erdgase der Gruppe L mit derartigen Zählern nicht zuverlässig gemessen werden.

In der Druckschrift JP 2004-233247 wird vorgeschlagen, die Teilung des Gasstroms derart durchzuführen, dass der Hauptstrom durch ein Trennungselement in zwei Teilströme aufgeteilt wird, die dann jeweils durch weitere Trennungselemente in zwei weitere Teilströme aufgeteilt werden. Eine derartige Aufteilung der Hauptströmung verbessert die Gleichmäßigkeit der Aufteilung der Strömung und minimiert das Problem der Abhängigkeit der Strömungsaufteilung von den Betriebsparametern. Dennoch können bereits, insbesondere bei einem gestörten Einlassprofil, geringfügige Abweichungen in der Art der Strömungsaufteilung, der Führung des Mediums in den Teilkanälen und der Zusammenführung zu stark unterschiedlichen Strömungsaufteilungen führen.

Es ist daher Aufgabe der vorliegenden Erfindung, einen insbesondere bezüglich der Unabhängigkeit der Aufteilungsfunktion von den Betriebsparametern verbesserten Durchflussmesser anzugeben.

Die Aufgabe wird durch einen Durchflussmesser der eingangs genannten Art gelöst, wobei die Teileinrichtung und/oder eine Beschleunigungseinrichtung, die in wenigstens einem der Kanäle zwischen Teileinrichtung und Messbereich angeordnet ist, zur Beschleunigung des Fluids ausgebildet ist, derart, dass das Fluid vor der Teileinrichtung eine erste Strömungsgeschwindigkeit aufweist und im Messbereich eine mindestens 1,5-fache, insbesondere eine mindestens doppelt so hohe, zweite Strömungsgeschwindigkeit.

Der Erfindung liegt die Idee zugrunde, dass es vorteilhaft ist, die Durchflussmessung bei höherer Geschwindigkeit durchzuführen, wobei in der Regel die Strömung während der Messung dennoch laminar sein soll, und die Aufteilung der Fluidströmung in mehrere Teilströmungen bei möglichst niedrigen Geschwindigkeiten durchzuführen. Niedrige Geschwindigkeiten bei der Strömungsaufteilung sind insbesondere vorteilhaft, da damit bei der Strömungsaufteilung eine besonders niedrige Reynoldszahl und damit eine besonders wenig turbulente Strömung erreicht wird. Zudem bildet sich bei niedrigen Strömungsgeschwindigkeiten auch ein gleichmäßiges Strömungsprofil aus. Des Weiteren sind bei geschlossenen Kanälen geringe Strömungsgeschwindigkeiten auch mit großen Querschnittsflächen der Kanäle gleichzusetzen und hohe Strömungsgeschwindigkeiten mit kleinen Querschnittsflächen der Kanäle. Dies führt insbesondere dazu, dass bei einer Aufteilung mit niedriger Strömungsgeschwindigkeit und einer Messung mit hoher Strömungsgeschwindigkeit der Strömungswiderstand des Messbereichs relativ groß und der Strömungswiderstand im Bereich der Aufteilung relativ gering ist. Dies führt dazu, dass unterschiedliche Strömungswiderstände der Teilkanäle im Bereich der Strömungsaufteilung eine wesentlich geringere Auswirkung auf die Aufteilung des Fluids auf die Kanäle haben. Auch Profilstörungen der Hauptströmung im Einlassbereich werden durch diese Art der Ausgestaltung eines Durchflussmessers gedämpft, so dass die aus einer Profilstörung hervorgerufenen Messfehler reduziert werden können.

Eine weitere Ausgestaltung der Erfindung ist es, eine ausreichend laminare Strömung im Messbereich sicherzustellen. Dies führt dazu, dass man die Unterschiede der Strömungsgeschwindigkeit zwischen dem Messbereich und dem Bereich vor der Teileinrichtung auch deutlich höher auslegen kann ohne das die Aufteilfunktion von den Betriebsparametern des Fluids abhängig wird. Beispielsweise kann die zweite Strömungsgeschwindigkeit mindestens dreimal oder mindestens viermal so hoch sein wie die erste Strömungsgeschwindigkeit.

Obwohl, aufgrund der geringeren Strömungsgeschwindigkeit im Bereich der Strömungsaufteilung, der Einfluss der Teileinrichtung auf die Aufteilung der Gesamtströmung in Teilströmungen abnimmt, ist dennoch eine im Wesentlichen gleiche Einströmgeometrie der Teilkanäle sichergestellt, um eine möglichst gleichmäßige Aufteilung der Gesamtströmung zu erreichen.

Mit dem erfindungsgemäßen Durchflussmesser ist eine Messung verschiedener Fluide, also von Gasen, wie beispielsweise Erdgas, und von Flüssigkeiten, wie beispielsweise Wasser, möglich.

Der erfindungsgemäße Durchflussmesser ist in mehrere Teilbereiche gegliedert. Ausgehend von einer eingehenden Strömung ist es auch möglich, diese in ein Fluidreservoir einzuleiten, das in Strömungsrichtung vor der Teileinrichtung angeordnet ist. Die Anordnung eines Reservoirs vor dem Durchflussmesser besitzt zwei wesentliche Vorteile. Insbesondere bei elastischen Fluiden, wie beispielsweise Gasen, wirkt ein vor dem Durchflussmesser angebrachtes Reservoir als ein Element, das schnelle Änderungen des Fluiddurchflusses glättet. Plötzliche Druckänderungen am Eingang des Durchflussmessers führen dann zunächst zu einer Druckänderung im Reservoir. Da das Reservoir aber ein relativ großes Volumen aufweist, werden zumindest impulsartige Druckänderungen nur abgeschwächt an den Durchflussmesser weitergegeben. Bei einem Durchflussmesser, insbesondere zur Verbrauchsmengenerfassung, ist es in der Regel gewünscht, dass die Durchflussmengen auf einer Zeitskala von Minuten, Stunden oder gar Tagen erfasst werden. Hier ist es nicht notwendig, plötzliche Änderungen des Durchflusses genau aufzulösen, solange die Gesamtdurchflussmenge korrekt erfasst wird. Solche plötzlichen Änderungen des Durchflusses auf sehr kurzen Zeitskalen können jedoch einige Messverfahren stören. Daher ist eine Glättung der Durchflussmenge durch ein vorgeschaltetes Reservoir vorteilhaft. Ein weiterer Vorteil bietet sich in dem das Reservoir Einlaufstörungen komplett eliminieren kann, so dass sich ein homogenes Einströmprofil vor dem Einströmen in die erste Teileinrichtung ausbilden kann. Zudem bildet ein Reservoir ein relativ großes Volumen mit geringem Druckgradient. Im Reservoir selbst strömt das Fluid also sehr langsam. Dadurch wird die Strömungsmessung von der Form des in den Durchflussmesser einströmenden Strömungsprofils unabhängig und Turbulenzen werden verringert. Da die strömungsmechanische Zusammenführung einer aufgeteilten Strömung ebenfalls eine Neigung zur Turbulenzbildung in sich trägt, können mit einem nachgelagerten Reservoir die gleichen positiven Effekte erzielt werden, wie bei der Einströmung.

Vor dem Messbereich ist eine Teileinrichtung angeordnet. Die Teileinrichtung dient der Aufteilung einer Hauptströmung in mindestens zwei, vorzugsweise mehrere, Teilströmungen. In diesem Bereich soll wie oben erläutert die Strömungsgeschwindigkeit des Fluids relativ gering sein. Daher sollten zumindest die Einströmkanäle der ersten Teilstufe eine relativ große Querschnittsfläche aufweisen. Insbesondere kann in der oder jeder der Teilstufen der Teileinrichtung eine möglichst gleichmäßige Aufteilung der Strömung erfolgt. Dies ist auf vielfältige Art und Weise möglich, worauf im Weiteren genauer eingegangen wird.

Nach der Teileinrichtung ist die Hauptströmung in mehrere Teilströmungen und damit in mehrere Kanäle aufgeteilt. Die Kanäle haben insbesondere den gleichen Strömungswiderstand und die Teilung der Strömung ist insbesondere gleichmäßig. Es ist möglich, dass bereits im Rahmen der Aufteilung der Hauptströmung in die Teilströmungen eine Beschleunigung des Fluids erfolgt ist. Insbesondere können in einer oder mehrerer der Teilstufen die Teilkanäle eine geringere Querschnittsfläche haben als der jeweilige Einströmkanal, wodurch eine Beschleunigung des Fluids erreicht wird. Ist die Geschwindigkeit des Fluids nach der Teileinrichtung bereits mindestens 1,5-fach oder doppelt so hoch wie die Geschwindigkeit des Fluids vor der Teileinrichtung, so kann die Messeinrichtung an einem der Kanäle hinter der Teileinrichtung angeordnet werden.

In vielen Ausführungsformen ist jedoch eine Beschleunigung bzw. eine weitere Beschleunigung des Fluids vor dem Messbereich gewünscht. Daher kann alternativ oder ergänzend zur Beschleunigung des Fluids in der Teileinrichtung eine Beschleunigung des Fluids in eine Beschleunigungseinrichtung erfolgen, die in Strömungsrichtung nach der Teileinrichtung angeordnet ist.

Wie eingangs erwähnt, ist es für eine gleichmäßige Aufteilung der Hauptströmungen in Teilströmungen vorteilhaft, wenn alle Kanäle, die die Teilströmungen führen, einen gleichen Strömungswiderstand aufweisen. Daher ist es vorteilhaft, wenn nicht nur der Messkanal, der die Messeinrichtung umfasst, sondern auch die weiteren Kanäle eine derartige Beschleunigungseinrichtung aufweisen. Diese Beschleunigungseinrichtungen sind insbesondere gleich aufgebaut. Zur Realisierung der Beschleunigungsvorrichtung sind mehrere Möglichkeiten vorgesehen, die im Folgenden beschrieben sind.

Nach der Beschleunigungseinrichtung, bzw. nach der Teileinrichtung, wenn keine Beschleunigungsvorrichtung vorgesehen ist, ist der Messbereich angeordnet, in dem in mindestens einem Messkanal eine Messung des Durchflusses erfolgt. Da die Strömung im erfindungsgemäßen Durchflussmesser vorzugsweise gleichmäßig auf eine Vielzahl von Kanälen verteilt wird, ist der Bruchteil der Strömung, die durch den Messkanal fließt, von weiteren Betriebsparametern, wie der Fluidzusammensetzung, der Temperatur oder Ähnlichem, unabhängig. Daher kann beim erfindungsgemäßen Durchflussmesser ohne eine aufwändige Kalibrierung über einen weiten Parameterbereich zuverlässig aus dem im Messkanal gemessen Durchfluss auf einen Gesamtdurchfluss geschlossen werden. Um zu gleichen Strömungswiderständen in der Anordnung zu kommen ist es vorteilhaft, wenn die Kanalführung im Messbereich so gestaltet ist, dass sie den sensorspezifischen Besonderheiten der Messeinheit Rechnung trägt. So ist es z. B. für eine mikrothermische Sensoranordnung vorteilhaft eine Kanalhöhe am Sensor von 0,5 bis 1,5 mm zu realisieren. Bei einer Ultraschallmesseinrichtung ist es z. B. notwendig, den Schall in die Messstrecke mittels eines Reflektors einzukoppeln. Die daraus resultierende Strömungsumlenkung kann nun in allen Teilkanälen nachgebildet werden, um gleiche Strömungswiderstände zu erhalten.

Meistens sollen die Kanäle nach dem Messbereich wieder in einen gemeinsamen Kanal zusammengeführt werden. Dies erfolgt in einer Zusammenführungseinrichtung, die das durch den Messbereich fließende Fluid in einen Ausgangskanal des Durchflussmessers zusammenführt. Hier ist zu beachten, dass die Art der Zusammenführung selbstverständlich einen Einfluss auf die Strömungswiderstände der Kanäle und damit auch auf die Aufteilung der Hauptströmung in Teilströmungen in der Teileinrichtung hat. Hier ist es für eine möglichst gleichmäßige Aufteilung der Hauptströmung in Teilströmungen notwendig, in der Zusammenführungseinrichtung auf eine Zusammenführung zu achten, die möglichst gleiche Strömungswiderstände in allen Kanälen, unabhängig von den Betriebsparametern, erzeugt. Der Aufbau einer solchen Zusammenführungseinrichtung wird im weiteren Text erläutert.

Im Folgenden wird zunächst auf verschiedene Möglichkeiten des Aufbaus der Teileinrichtung eingegangen. Die Teileinrichtung kann im einfachsten Fall aus einer einzelnen Teilstufe bestehen, in der eine durch den Einströmkanal einströmende Strömung in wenigstens zwei Teilkanäle aufgeteilt wird. Zum Erreichen einer gleichmäßigen von den Betriebsparametern unabhängigen Strömungsaufteilung ist es vorteilhaft, wenn die Teilkanäle jeder Teilstufe im Wesentlichen gleiche Strömungswiderstände, und insbesondere auch gleiche Kanalgeometrien, aufweisen.

Der Strömungswiderstand der einzelnen Teilkanäle hängt zum einen von der Art der Aufteilung ab, zum anderen von dem weiteren Verlauf des Kanals. Es ist besonders einfach möglich, einen im Wesentlichen gleichen Strömungswiderstand der Teilkanäle zu erreichen, wenn die Teilkanäle in ihrem weiteren Verlauf im Wesentlichen gleich geführt sind. So sollten die weitere Aufteilung der Teilkanäle, die optionale zusätzliche Beschleunigung des Fluids in einer Beschleunigungseinrichtung und die anschließende Zusammenführung des Fluids für jeden der Teilkanäle möglichst gleich erfolgen.

Alternativ können die gleichen Strömungswiderstände der Teilkanäle jedoch auch erreicht werden, indem gezielt zusätzliche Elemente in einzelne Teilkanäle eingebracht werden, die den Strömungswiderstand erhöhen, um so die Strömungswiderstände der unterschiedlichen Teilkanäle anzugleichen. Bei stark unterschiedlicher weiterer Führung der Teilkanäle kann ein solches Angleichen jedoch problematisch sein, da der Einfluss der zusätzlichen Stauelemente von den Betriebsparametern abhängen kann.

Als weitere Alternative ist es auch möglich, die Strömungswiderstände der Teilkanäle durch zusätzliche Stauelemente oder sehr enge Kanäle stark zu erhöhen. In diesem Fall sinkt der Einfluss der anderen Strömungswiderstände auf die Teilung des Hauptstroms in die Teilkanäle.

Um eine möglichst gleichmäßige Aufteilung der Strömung zu erreichen ist es vorteilhaft, wenn die Einströmgeometrie der Teilkanäle im Wesentlichen gleich ist. Dies ist besonders einfach dann möglich, wenn die Teilstufe oder wenigstens eine der Teilstufen genau zwei Teilkanäle aufweist. So kann in einem rechteckigen, einem runden oder jeglichem anderen Kanal, dessen Querschnitt eine Spiegelebene aufweist, ein bezüglich dieser Spiegelebene symmetrisches Stauelement zur Aufteilung der Strömung in Teilkanäle an dieser Spiegelebene angeordnet werden. Ist der Einströmkanal ausreichend lang, so ist davon auszugehen, dass die Geometrie des Strömungsprofils im Wesentlichen der des Einströmkanals entspricht. Wird daher der Einströmkanal entlang einer seiner Symmetrieebenen geteilt, so wird auch die Strömung entlang einer ihrer Symmetrieebenen und damit gleichmäßig geteilt.

Um eine möglichst gleiche Einströmgeometrie in die Teilkanäle zu gewährleisten, kann es auch vorteilhaft sein, die Einströmbereiche der Teilkanäle möglichst weitgehend zu entkoppeln. Trifft das Fluid auf ein oder mehrere Stauelemente, zwischen denen die Kanäle ausgebildet sind, so ist die Strömungsgeschwindigkeit im Übergangsbereich zwischen den Teilkanälen und dem Einströmkanal lokal stark unterschiedlich. Die Stauelemente bremsen die auf sie treffende Fluidströmung stark, im Bereich der Kanäle wird die Strömungsgeschwindigkeit des Fluids jedoch erhöht. Dieses ungleichmäßige Strömungsprofil kann zu einer Wechselwirkung der Fluidströmungen, die in die verschiedenen Kanäle einfließen, führen und damit Verwirbelungen, lokale Druckunterschiede oder Ähnliches erzeugen, was wiederum zu einer ungleichmäßigen Aufteilung des Fluidstroms in die Teilkanäle führen kann. Daher ist es vorteilhaft, wenn in der Teilstufe oder wenigstens einer der Teilstufen wenigstens zwei der Teilkanäle durch das Stauelement beabstandet sind, wobei der Abstand der Teilkanäle wenigstens dreimal so groß ist, wie der Durchmesser eines der Teilkanäle.

Häufig ist es auch gewünscht, einen Einströmkanal derart aufzuteilen, dass die Aufteilung keiner natürlichen Symmetrie des Einströmkanals entspricht. In diesem Fall weisen die Teilkanäle unterschiedliche Abstände von den Wänden des Einströmkanals auf. Dies führt jedoch zu einer unterschiedlichen Einströmgeometrie der Teilkanäle, die, um eine gleichmäßige Aufteilung der Fluidströmungen auf die Teilkanäle zu erreichen, vermieden werden soll. Um den Einfluss der Wand des Einströmkanals auf die Fluidaufteilung zu verringern, sollten die Einströmbereiche der Teilkanäle von den Wänden des Einströmkanals beabstandet sein.

Somit kann auch eine Unterteilung von rechteckigen Einströmkanälen in wenigstens drei Kanäle erfolgen, wobei in der Teilstufe oder wenigstens einer der Teilstufen der Einströmkanal im Wesentlichen rechteckig und seine Breite mindestens dreimal so groß wie seine Höhe ist, wobei das Stauelement den Einströmkanal in Breitenrichtung in wenigstens zwei, insbesondere wenigstens drei, Teilkanäle unterteilt, wobei die Teilkanäle vom Rand des Einströmkanals in Breitenrichtung um wenigstens 10%, insbesondere wenigstens 15%, der Breite des Einströmkanals beabstandet sind. Eine besonders gleichmäßige Aufteilung ist in diesem Fall möglich, wenn die Breite des Einströmkanals mindestens fünfmal, insbesondere mindestens zehnmal so breit ist wie die Höhe.

Insbesondere um die Abmessungen der Teilstufen und damit auch des Durchflussmessers zu reduzieren, kann es vorteilhaft sein, die Aufteilung des Einströmkanals in Teilkanäle derart vorzunehmen, dass die Teilkanäle über die ganze Querschnittsfläche des Einströmkanals verteilt sind. So kann in der Teilstufe oder wenigstens einer der Teilstufen das Stauelement den Einströmkanal in wenigstens drei Teilkanäle unterteilen, wobei die Teilkanäle in mindestens zwei Ebenen liegen. Es erfolgt also eine zweidimensionale Aufteilung des Einströmkanals.

Dabei ist es insbesondere möglich, dass die Teilstufe in der Schnittebene im Bereich des Stauelements senkrecht zur Richtung des Einströmkanals aus mindestens drei identischen Bereichen besteht, die je wenigstens einen Teilkanal aufweisen. Die Bereiche können in diesem Fall beliebig gegeneinander gedreht und voneinander beabstandet sein. Durch den identischen Aufbau der Bereiche wird sichergestellt, dass die Einströmgeometrie jedes Teilkanals der Teilstufe gleich ist. Innerhalb dieses Aufbauschemas für Teilstufen sind eine Vielzahl Ausführungsformen denkbar.

So kann der Querschnitt des Einströmkanals kreisförmig sein und die Teilstufe mindestens drei in Umfangsrichtung des Einströmkanals gleichmäßig beabstandete Teilkanäle umfassen. In diesem Fall ist die Geometrie der einen Teilkanal umgebenden Elemente für jeden der Teilkanäle gleich. So weist jeder der Teilkanäle in seiner nächsten Umgebung eine radial beabstandete Außenwand des Einströmkanals sowie zwei um einen gewissen Winkel beabstandete Nachbarkanäle auf und auch die relative Anordnung der weiteren Kanäle ist für jeden der Teilkanäle gleich.

Alternativ ist es möglich, dass der Querschnitt des Einströmkanals rechteckig ist und die Teilstufe genau vier Teilkanäle umfasst. In diesem Fall können die Teilkanäle in den vier Quadranten des rechteckigen Einströmkanals derart angeordnet sein, dass die Teilkanäle die gleiche Höhe und Breite aufweisen und im gleichen Abstand von den jeweils nächsten Wänden angeordnet sind. Damit wird eine gleiche Einströmgeometrie für die vier Teilkanäle erreicht.

Wie eingangs erwähnt ist es möglich, dass bereits in der Teileinrichtung eine Beschleunigung des Fluids erfolgt. Eine solche Beschleunigung ist insbesondere dadurch möglich, dass in der Teilstufe oder wenigstens einer der Teilstufen die Summe der Querschnittsflächen der Teilkanäle kleiner ist als die Querschnittsfläche des Einströmkanals.

Die Teileinrichtung kann wie erläutert auf vielfältige Weise gebildet werden, und teilt die Fluidströmung, vorzugsweise gleichmäßig, auf mehrere Kanäle auf. In diesen Kanälen kann eine Beschleunigung bzw. eine weitere Beschleunigung des Fluids erfolgen. Hierfür kann der erfindungsgemäße Durchflussmesser eine Beschleunigungseinrichtung aufweisen, deren vorteilhafte Ausführungen im Folgenden erläutert werden.

Die Beschleunigung des Fluids in einem Kanal entspricht zugleich einer Verringerung der Querschnittsfläche des Kanals, da die Gesamtmenge des Durchflusses in jedem Kanalabschnitt eines Kanals gleich sein muss. Im erfindungsgemäßen Durchflussmesser erfolgt eine Beschleunigung insbesondere in rechteckigen Spaltkanälen. Spaltkanäle sind vorteilhaft, da in ihnen besonders leicht eine laminare Strömung erreicht werden kann. Daher wird im Folgenden davon ausgegangen, dass in der Beschleunigungseinrichtung ein Fluidstrom in einem rechteckigen Kanal beschleunigt werden soll. Die beschriebenen Prinzipien lassen sich auch auf nicht rechteckige Kanäle übertragen, in diesen Fällen müssen jedoch unter Umständen zusätzliche Maßnahmen ergriffen werden, um Turbulenzen zu vermeiden.

Die Querschnittsfläche zumindest eines der Kanäle kann also hinter der Beschleunigungseinrichtung kleiner sein als vor der Beschleunigungseinrichtung, wobei der Kanal im Bereich der Beschleunigungseinrichtung eine im Wesentlichen rechteckige Form mit zwei Seitenwänden, einem Boden und einer Decke aufweist.

Im erfindungsgemäßen Durchflussmesser ist es vorteilhaft, die Kanäle alle innerhalb einer gemeinsamen Baueinheit auszubilden. Die Kanäle werden hier beispielsweise parallel und durch Wände beabstandet geführt. Die einfachste Art die Querschnittsfläche der Kanäle zu reduzieren wäre in diesem Fall eine Vergrößerung der Wandstärke. Abhängig vom Herstellungsverfahren des Durchflussmessers kann eine solche Vergrößerung der Wandstärke jedoch nicht mit der erforderlichen Präzision möglich sein.

Eine Beschleunigung kann jedoch auch dadurch erfolgen, dass die Beschleunigungseinrichtung ein Abwinkelungsbereich ist, in dem sich die Richtung des Kanals in die Richtung einer der Seitenwände ändert, und wobei insbesondere die beiden Seitenwände im Abwinkelungsbereich die gleiche Form aufweisen. Werden eine Vielzahl solcher Wände, die die Kanäle beabstanden, in eine Richtung senkrecht zur ursprünglichen Kanalrichtung parallel versetzt angeordnet, so befindet sich der Knick bzw. die Richtungsänderung des Kanals, in Kanalrichtung betrachtet, für alle Kanäle an der gleichen Stelle. Anders ausgedrückt haben die beiden Seitenwände eines Kanals an den Stellen, die senkrecht zur Kanalrichtung gegenüberliegen, die gleiche Krümmung. Erfolgt bei einer derartigen Anordnung eine Abwinkelung der Wände um einen Winkel α, so ist die Breite des Kanals im gewinkelten Bereich das Produkt aus der Breite des Kanals im Bereich vor dem Abwinkelungsbereich mit dem Kosinus von α.

Alternativ oder ergänzend kann die Breite der Kanäle auch reduziert werden, indem wenigstens eine der Seitenwände eines Kanals vor der Beschleunigungseinrichtung auch eine Seitenwand eines zweiten Kanals bildet, und nach der Beschleunigungseinrichtung der Kanal und der zweite Kanal in Richtung der Seitenwand durch einen Zwischenraum beabstandet sind. In diesem Fall ist es möglich, die beiden Wände vor der Zusammenführung der Kanäle wieder zusammenzuführen, um beispielsweise eine Zusammenführung der Kanäle bei einer niedrigeren Strömungsgeschwindigkeit zu erreichen. Die Seitenwände der Kanäle können auch frei in einem weiteren Kanal enden. In diesem Fall erfolgen die Zusammenführung und die Verlangsamung des Fluids gemeinsam.

Insbesondere, wenn die Wände, die den Zwischenraum begrenzten, frei in einem weiteren Kanal enden, können sich der Boden und/oder die Decke auch im Bereich des Zwischenraums fortsetzen und im Bereich des Zwischenraums eine Öffnung zum Einbringen von, insbesondere gereinigtem, Fluid aufweisen. Damit wird eine zusätzliche Fluidspülung des Zwischenraums erreicht. Erfolgt eine solche Spülung nicht, kann der Gasaustausch zwischen dem Zwischenraum den anderen Bereichen des Durchflussmessers nur sehr langsam erfolgen. Wechselt nun beispielsweise die zu zählende Fluidsorte, so kann das Fluid, das sich im Zwischenraum befindet, in den Bereich der Messeinrichtung diffundieren und die Messung verfälschen. Dies wird durch eine Spülung des Zwischenraums vermieden.

Nach der Beschleunigung kann die Messung des Fluiddurchflusses erfolgen. Für die Messung des Durchflusses in einem Kanal sind im Stand der Technik eine Vielzahl von Methoden, beispielsweise die thermische Messmethode und Ultraschallmessungen, bekannt. Daher soll auf die Durchführung der Durchflussmessung selbst nicht weiter eingegangen werden.

Nach der Messung sollen die Fluidströmungen der verschiedenen Kanäle meist wieder in einen gemeinsamen Kanal zusammengeführt werden. Dies erfolgt in der im Folgenden näher beschriebenen Zusammenführungseinrichtung.

Es ist möglich, dass die Kanaleinheit eine Zusammenführungseinrichtung mit einer oder mehreren Zusammenführungsstufen zur Zusammenführung des durch die Kanäle des Messbereichs fließenden Fluids in einen Ausgangskanal umfasst, wobei jede Zusammenführungsstufe durch wenigstens zwei Einzelkanäle einströmendes Fluid in einen Sammelkanal zusammenführt.

Wie eingangs erläutert kann die Art der Zusammenführung der Kanäle einen wesentlichen Einfluss auf den Strömungswiderstand der Kanäle und damit auf die Aufteilung des Fluidstroms auf die Kanäle haben. Daher sollten Unterschiede in der Ausströmgeometrie der Einzelkanäle und zufällige Anhaftungseffekte an Wänden vermieden werden. Um den Einfluss der Zusammenführungseinrichtung auf den Strömungswiderstand der Kanäle zu verringern ist es auch möglich, dass zwischen dem Messbereich und der Zusammenführungseinrichtung eine Verlangsamungseinrichtung angeordnet ist, die die Strömungsgeschwindigkeit des Fluids senkt. Eine solche Verlangsamungseinrichtung kann prinzipiell aufgebaut sein wie eine umgekehrte Beschleunigungseinrichtung. Es können also die beschriebenen Ausführungsformen für Beschleunigungsvorrichtungen angepasst werden, wobei jeweils der Bereich des einströmenden Fluids und der Bereich des ausströmenden Fluids zu vertauschen sind. Bei der Verlangsamungseinrichtung ist zu beachten, dass die Aufweitung des Kanalquerschnitts in der Regel zu Ablösegebieten führt, welche sich bei der Zusammenführung der Strömungen nachteilig auswirken können.

Zur Angleichung der Ausströmgeometrie der Ausgangskanäle können zudem die Erläuterungen zu der Teileinrichtung herangezogen werden. So kann das bezüglich der Einströmgeometrie mit Bezug auf die Teileinrichtung Gesagte im Bezug auf die Ausströmgeometrie auf die Zusammenführungseinrichtung übertragen werden.

Des Weiteren ist es vorteilhaft, wenn in der Zusammenführungsstufe oder einer der Zusammenführungsstufen die Einzelkanäle in einem Sammelkanal mit größerem Durchmessen enden, wobei wenigstens einer der Einzelkanäle an seinem Ende ein Verlängerungselement aufweist, das in einem Teil des Umfangs des Einzelkanals eine Verlängerung einer Seitenwand des Einzelkanals bildet. Beim Ausströmen eines Fluids auf einem der Einzelkanäle in dem Sammelkanal kann es zu zufälligen Wandanhaftungseffekten kommen. Abhängig von geringfügigen Strömungsveränderungen kann die Fluidströmung beim Ausströmen an einer der Wände des Kanals anhaften und damit den Strömungswiderstand des Kanals verändern. Um dies zu vermeiden, kann gezielt ein Teil der Seitenwand des Einzelkanals verlängert werden, wodurch ein kontrolliertes Wandanhaften der Fluidströmung und damit ein kontrollierter Strömungswiderstand erreicht wird.

Einen weiteren potentiellen Einfluss auf den Strömungswiderstand der Kanäle stellt die Wechselwirkung zwischen aus den einzelnen Kanälen ausfließenden Fluidströmungen im Sammelkanal dar. So können geringfügig andere Eingangsströmungen unter Umständen zu einer stark unterschiedlichen Druckverteilung im Ausflussbereich der Einzelkanäle führen, wodurch die Strömungswiderstände einzelner Kanäle stark variieren können. Um dies zu vermeiden ist es vorteilhaft, wenn die Zusammenführungseinrichtung mindestens ein Verwirbelungselement zur Verwirbelung der Fluidströmung aufweist. In diesem Fall ist die Ausgangsströmung turbulent. Dadurch werden semi-stabile Druckverteilungen, die den Strömungswiderstand eines oder mehrerer Kanäle beeinflussen, verhindert oder zumindest verringert.

Die Verwirbelungselemente können auf der der Fluidströmung zugewandten Seite im Wesentlichen flach sein. Dadurch wird eine Seitenbewegung des Fluids erzwungen und damit eine besonders starke Verwirbelung erreicht.

Um sicherzustellen, dass keine Anhaft-, Ablös- oder Wechselwirkungseffekte für die Ausgangsströmungen auftreten, ist es vorteilhaft, wenn die Eingangskanäle der Zusammenführungsstufe oder wenigstens einer der Zusammenführungsstufen im Übergangsbereich zum Sammelkanal mindestens ein, insbesondere zwei Verwirbelungselemente aufweisen. Kombiniert man die Nutzung der Verwirbelungselemente mit einem Fluidreservoir im bzw. nach dem Sammelkanal, so können die durch Kanalaufweitung und Zusammenführung resultierenden Verwirbelungen auslaufen um dann einem Auslaufkanal zugeführt zu werden. Dadurch kann die Entkopplung der Turbulenzen gegenüber dem Messbereich noch verbessert werden. Insbesondere können dynamische Strömungsvorgänge besser gedämpft werden.

Wie eingangs beschrieben ist es vorteilhaft, wenn die Kanaleinheit wenigstens ein Fluidreservoir umfasst, das vor der Teileinrichtung und/oder nach wenigstens einer der Zusammenführungsstufen angeordnet ist. Durch das Fluidreservoir können Schwankungen der Strömungsgeschwindigkeit vor dem Durchflussmesser geglättet und Turbulenzen reduziert werden.

Um Turbulenzen zu reduzieren, die bei jeder Änderung der Kanalgeometrie auftreten können, ist es vorteilhaft, wenn die Länge wenigstens eines der Kanäle wenigstens dreimal, insbesondere mindestens fünfmal so groß ist, wie der Querschnitt des Kanals.

Abhängig vom verwendeten Messverfahren sind unterschiedliche Kanalformen des Messkanals vorteilhaft. So ist es beispielsweise möglich, dass die Querschnittsfläche wenigstens eines der Kanäle rechteckig oder rund ist.

Rechteckige Kanäle können vorteilhafterweise als Spaltkanäle ausgebildet werden. Es ist möglich, dass das Höhe:Breite Verhältnis mindestens eines der rechteckigen Kanäle maximal 1 : 3, insbesondere maximal 1 : 5, speziell maximal 1 : 10 ist. Spaltkanäle führen üblicherweise zu einer gleichmäßigen laminaren Strömung, die zum Aufteilen der Strömung und zum Messungen vorteilhaft ist. Besonders vorteilhaft ist mindestens einer der Kanäle zwischen 0,7 mm und 1,5 mm hoch. Üblicherweise sollen Spaltkanäle möglichst flach ausgeführt werden, um eine optimale laminare Strömung zu erreichen. Werden Kanäle jedoch zu flach gebildet, führen bereits minimale Fertigungstoleranzen der Kanäle zur Bildung von Turbulenzen und zu Änderungen des Strömungswiderstands des Kanals.

Zumindest in einem der Kanäle können auch zusätzliche Stauelemente zur Erhöhung des Strömungswiderstands angeordnet sein. Dies kann zum einen genutzt werden, um die Strömungswiderstände verschiedener Kanäle aneinander anzugleichen, zum anderen kann auch der Strömungswiderstand aller Kanäle erhöht werden. Dies ist vorteilhaft, da ein insgesamt höherer Strömungswiderstand der Kanäle den Beitrag der Aufteilung und Zusammenführung der Kanäle zum Strömungswiderstand verringert und damit Unterschiede zwischen den Kanälen bei der Aufteilung oder der Zusammenführung des Fluids weniger Einfluss auf die Messung haben.

Die Messeinrichtung im Messbereich kann insbesondere aus einem Sensor oder einer Sensoranordnung bestehen, welche eine Fluidgröße, insbesondere die Durchflussmenge, erfasst. Insbesondere kann die Sensoranordnung einen thermischen, insbesondere einen mikrothermischen Sensor umfassen oder der Sensor kann ein thermischer, insbesondere ein mikrothermischer Sensor, sein. Die Sensoreinrichtung kann auch einen Ultraschallsensor, insbesondere eine Ultraschallsensoreinheit nach dem Differenzlaufzeitverfahren, umfassen oder der Sensor kann ein Ultraschallsensor, insbesondere eine Ultraschallsensoreinheit nach dem Differenzlaufzeitverfahren, sein.

Daneben betrifft die vorliegende Erfindung eine Durchflussmesseranordnung, die wenigstens einen Durchflussmesser der oben beschriebenen Art und wenigstens eine Durchflussmesserattrappe, die identisch zum Durchflussmesser aufgebaut ist, außer, dass im Messkanal keine Messeinrichtung angeordnet ist, umfasst, wobei eine zusätzliche Teileinrichtung zur gleichmäßigen Verteilung eines Fluidstroms auf den Durchflussmesser und die Durchflussmesserattrappe ausgebildet ist und wobei eine zusätzliche Zusammenführungseinrichtung zur Zusammenführung der Fluidströme des Durchflussmessers und der Durchflussmesserattrappe ausgebildet ist.

Messungen an Teilströmen verbessern generell die Skalierbarkeit von Messverfahren für Durchflussmessungen. Dennoch ist es sehr aufwändig, für jeden Durchflussmengenbereich separate Durchflussmesser zu entwickeln. Eine Alternative hierzu ist es, mehrere Durchflussmesser parallel zu betreiben und jeweils nur einen Teilstrom des zu messenden Stroms durch jeden Durchflussmesser zu führen. Dadurch entstehen häufig zusätzliche Kosten, da aufwändige Messeinrichtungen und Auswerteelektroniken mehrfach vorhanden sein müssen. Es ist daher vorteilhaft, neben dem Durchflussmesser eine oder mehrere Durchflussmesserattrappen zu nutzen. Da diese bis auf das Fehlen der Messeinrichtung identisch wie der Durchflussmesser aufgebaut sind, haben sie auch einen identischen Strömungswiderstand. Damit kann mit einem wesentlich verringerten finanziellen Aufwand eine Messung von größeren Strömungsmengen erreicht werden.

Zur Nutzung von Durchflussmesserattrappen ist es notwendig, einen Fluidstrom auf den Durchflussmesser und eine oder mehrere Durchflussmesserattrappen zu verteilen und nach der Messung wieder zusammenzuführen. Dazu wird eine zusätzliche Teileinrichtung und eine zusätzliche Zusammenführungseinrichtung genutzt. Für diese Einrichtungen sind die oben erläuterten Ausführungsformen der Teileinrichtung und der Zusammenführungseinrichtung des Durchflussmessers nutzbar. Zudem kann die Teilung bzw. Zusammenführung bei einer niedrigen Strömungsgeschwindigkeit durchgeführt werden und das Fluid dem Durchflussmesser mit einer höheren Strömungsgeschwindigkeit zugeführt werden.

Die weiteren Vorteile und Einzelheiten der Erfindung ergeben sich aus den folgenden Ausführungsbeispielen und den zugehörigen Zeichnungen. Dabei zeigen:
- Fig. 1: eine schematische Darstellung des erfindungsgemäßen Durchflussmessers,
- Fig. 2: ein Ausführungsbeispiel einer Teileinrichtung eines erfindungsgemäßen Durchflussmessers,
- Fig. 3: ein weiteres Ausführungsbeispiel einer Teileinrichtung eines erfindungsgemäßen Durchflussmessers,
- Fig. 4: ein drittes Ausführungsbeispiel einer Teileinrichtung eines erfindungsgemäßen Durchflussmessers,
- Fig. 5: ein Ausführungsbeispiel einer Beschleunigungseinrichtung eines erfindungsgemäßen Durchflussmessers,
- Fig. 6: ein weiteres Ausführungsbeispiel einer Beschleunigungseinrichtung eines erfindungsgemäßen Durchflussmessers,
- Fig. 7: ein Ausführungsbeispiel einer Zusammenführungseinrichtung eines erfindungsgemäßen Durchflussmessers,
- Fig. 8: ein weiteres Ausführungsbeispiel einer Zusammenführungseinrichtung eines erfindungsgemäßen Durchflussmessers, und
- Fig. 9: eine schematische Darstellung eines Ausführungsbeispiels einer erfindungsgemäßen Durchflussmesseranordnung.

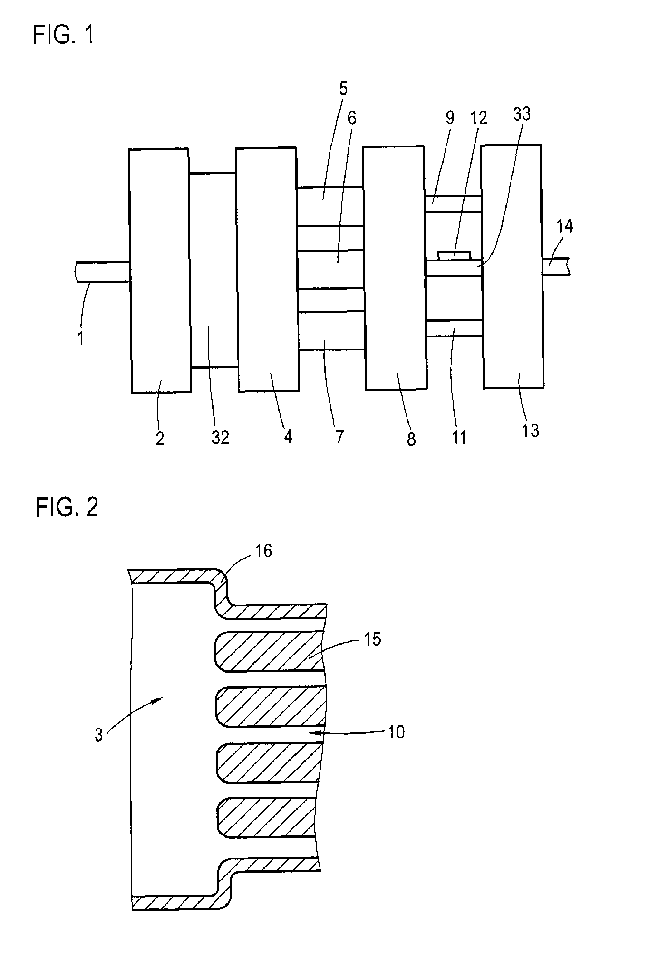

Fig. 1 zeigt eine schematische Darstellung eines Durchflussmessers. Das Fluid wird dem Durchflussmesser über einen Zuführkanal 1 zugeführt und verlässt den Durchflussmesser durch den Ausgangskanal 14. Am Durchflussmesser soll eine Bypassmessung mit der Messeinrichtung 12 am Messkanal 33 durchgeführt werden. Um mit Hilfe dieser Bypassmessung zuverlässige Aussagen über den Gesamtdurchfluss, unabhängig von weiteren Parametern wie Temperatur oder Fluidzusammensetzung, treffen zu können, ist es besonders vorteilhaft, wenn der Fluidstrom im Messbereich gleichmäßig auf die Kanäle 9, 11, 33 verteilt ist.

Um dies zu erreichen ist es zunächst vorteilhaft, den Durchflussmesser vom Strömungsprofil im Zuführkanal 1 zu entkoppeln und plötzliche Druckschwankungen im Zuführkanal 1 zu glätten. Daher wird der Zuführkanal 1 zunächst in ein Fluidreservoir 2 geführt. Das Fluidreservoir 2 besteht aus einem Volumen, das ausreichend groß ist, um eine vorgegebene Verweilzeit des Fluids im Reservoir zu ermöglichen. Beispielsweise kann das Volumen des Fluidreservoirs 2 so groß sein, dass der maximal zu messende Durchfluss bei einer Sekunde integriert im Fluidreservoir 2 aufgenommen werden kann.

Es ist vorteilhaft, wenn der Zufluss und Abfluss des Fluidreservoirs 2 nicht direkt gegenüberliegend sind, da in diesem Fall ein Großteil des Fluids das Fluidreservoir 2 direkt passieren würde. Eine optimale Verweildauer des Fluids im Fluidreservoir 2 kann beispielsweise durch eine Verwirbelung beim Übergang des Zuführkanals 1 ins Fluidreservoir oder durch Anordnung des Zuflusses und des Abflusses derart, dass ein geradliniger Fluidstrom durch das Fluidreservoir 2 nicht möglich ist, erreicht werden. Dadurch, dass die Flussgeschwindigkeit im Fluidreservoir 2 auf nahezu Null gesenkt wird, ist die Strömung im Eingangskanal 32 nahezu unabhängig von dem Strömungsprofil im Zuführkanal 1, insbesondere unabhängig von dort auftretenden Turbulenzen. Es ist anzumerken, dass der Eingangskanal 32 nicht unbedingt notwendig ist, da beispielsweise direkt Stauelemente der Teileinrichtung 4 in das Fluidreservoir 2 eingebracht werden können, wodurch der Einströmkanal der ersten Teilstufe der Teileinrichtung 4 durch das Fluidreservoir 2 selbst gebildet wird.

Der Eingangskanal 32 bzw. wie oben erläutert das Fluidreservoir 2 bilden den Einströmkanal der Teilstufe bzw. der ersten Teilstufe der Teileinrichtung 4. Im Ausführungsbeispiel soll der Fluidstrom des Eingangskanals 32 in drei Kanäle 5, 6, 7 aufgeteilt werden. Für eine Aufteilung in drei Teilkanäle wäre es vorteilhaft, eine einzige Teilstufe zu verwenden, die drei Teilkanäle aufweist. Vorteilhafte Ausbildungsformen für Teilstufen mit mehr als zwei Teilkanälen werden im Weiteren mit Bezug auf Fig. 2 bis Fig. 4 beschrieben.

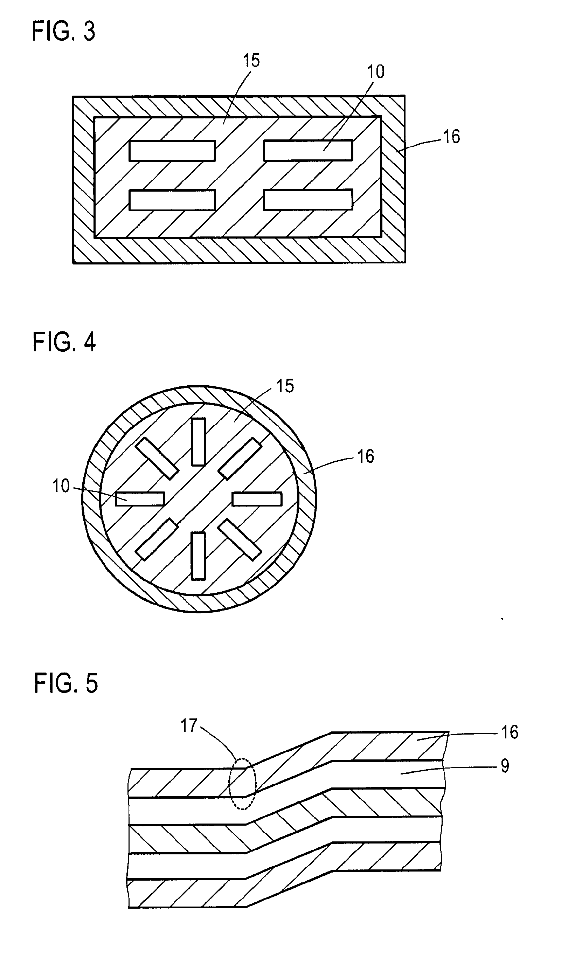

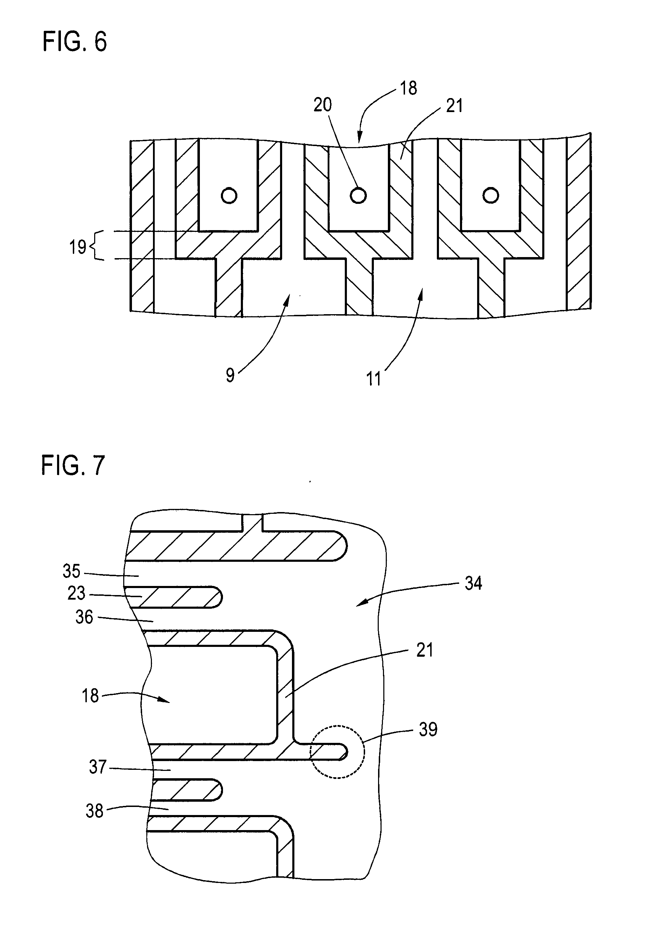

Zum leichteren Verständnis ist in Fig. 1 schematisch eine Teileinrichtung gezeigt, deren Einströmkanal die gleiche Querschnittsfläche aufweist wie die Summe der Querschnittsflächen der drei Kanäle 5, 6 und 7. Da zur Messung eine höhere Fluidgeschwindigkeit gewünscht ist als zur Aufteilung, soll anschließend die Fluidströmung in der Beschleunigungseinrichtung 8 beschleunigt werden. Die Beschleunigungseinrichtung 8 ist hier nur durch eine Verringerung des Kanalquerschnitts zwischen den Kanälen 5, 6 und 7 und den Kanälen 9, 11 und 33 dargestellt. Ausführungsbeispiele der Beschleunigungseinrichtung werden mit Bezug auf Fig. 5 und Fig. 6 beschrieben.

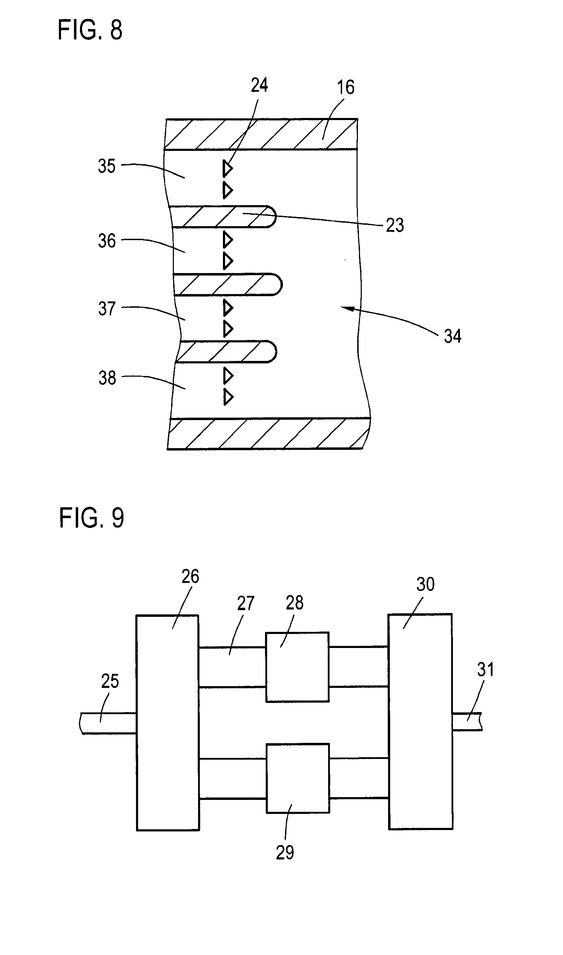

Nach der Beschleunigung kann im Kanal 33 die Messung durch die Messeinrichtung 12 erfolgen. Die Fluidströmungen in den Kanälen 9 und 11 werden nur beschleunigt, um sicherzustellen, dass die Kanäle 9, 11 und 33 den gleichen Strömungswiderstand aufweisen und damit eine gleichmäßige Aufteilung des Fluids, unabhängig von weiteren Betriebsparametern, erfolgt. In der Regel soll das Fluid, dessen Durchfluss gemessen wurde, weiter genutzt werden. Daher wird das Fluid nach der Messung durch die Zusammenführungseinrichtung 13 in den Ausgangskanal 14 zusammengeführt. Vorteilhafte Ausprägungen einer Zusammenführungseinrichtung 13 werden mit Bezug auf Fig. 7 und Fig. 8 erläutert.

Fig. 2 zeigt ein Ausführungsbeispiel einer Teilstufe. Das Fluid strömt durch den Einströmkanal 3 auf die Stauelemente 15 und wird durch die Stauelemente 15 in die Kanäle 10 aufteilt. Eine gleichmäßige Aufteilung des Fluids auf mehr als zwei Teilkanäle ist nur unter bestimmten Bedingungen möglich. In diesem Fall soll der Einströmkanal 3 als Spaltkanal ausgebildet sein. Dies bedeutet, dass seine Höhe senkrecht zur Bildebene um ein Vielfaches geringer ist als seine Breite in der Bildebene. In Fig. 2 ist es vorteilhaft, wenn die Höhe des Einströmkanals gleich der Höhe der Teilkanäle 10 ist, da in diesem Fall ein besonders einfacher Aufbau der Teileinrichtung möglich ist.

Um eine gleichmäßige Verteilung auf fünf Teilkanäle zu ermöglichen, sollte das Höhe zu Breite Verhältnis maximal 1 : 5, vorzugsweise maximal 1 : 10 sein. In einem Kanal mit runden oder nahezu quadratischen Abmessungen kann das Strömungsprofil im Kanal bei laminarer Strömung als eine Parabel angenähert werden. Bei zunehmender Abflachung des Kanals kann die Wechselwirkung mit den seitlichen Wänden 16 in zunehmend größeren Teilen des Kanals vernachlässigt werden. Dies bedeutet, dass das Strömungsprofil im Einströmkanal 3 über einen großen Teil der Breite homogen ist und nur in einem Bereich nahe der Wand 16 eine Parabelform auftritt. Dies bedeutet zugleich, dass im Eingangsbereich der Teilkanäle 10 die Strömungsgeschwindigkeit des einströmenden Fluids für alle Teilkanäle gleich ist. Damit wird eine gleichmäßige Aufteilung des Fluids in die Teilkanäle 10 möglich. Die gezeigte relativ große Beabstandung der Teilkanäle 10 durch die Bauelemente 15 ist vorteilhaft, da durch diese Beabstandung die gegenseitige Beeinflussung der Fluidströmungen, die in die Teilkanäle 10 fließen, verringert bzw. verhindert wird. Wird eine Wechselwirkung zwischen den Strömungen in den Teilkanälen 10 im Einströmbereich nicht verhindert, so ist es möglich, dass semi-stabile Druckverteilungen entstehen, die den Strömungswiderstand einzelner Teilkanäle 10 heben oder senken. Dies würde wiederum zu einer ungleichmäßigen Verteilung der Fluidströmung führen. Durch die Stauelemente 15, deren Breite dreimal so groß ist wie die der Kanäle 10 wird dieser Effekt gemindert.

Fig. 3 zeigt ein weiteres Ausführungsbeispiel der Teileinrichtung eines Durchflussmessers. Hier ist ein Schnitt durch das Stauelement senkrecht zur Richtung des Einströmkanals gezeigt. Ein Stauelement 15 weist vier durchgehende Ausnehmungen 10 auf, die die Teilkanäle bilden. Es ist leicht zu erkennen, dass jeder dieser vier Teilkanäle eine identische Einströmgeometrie aufweist, da die Abstände zur Wand 16 und den weiteren Teilkanälen 10 für jeden der Teilkanäle 10 gleich sind.

Fig. 4 zeigt ein weiteres Stauelement 15, das in einen runden Kanal mit Kanalwand 16 eingebracht werden kann, um zahlreiche Teilkanäle 10 auszubilden. Der weitere Aufbau entspricht dem Stauelement 15, das mit Bezug auf Fig. 3 beschrieben ist. Es sei angemerkt, dass in das in Fig. 4 gezeigte Stauelement 15 eine nahezu beliebige Anzahl von Kanälen 10 eingebracht werden kann, da hier nur ein gleichmäßiger Winkelabstand zwischen den Teilkanälen sichergestellt werden muss. In der gezeigten Teileinrichtung ist die längere Seite der Teilkanäle 10 in Radialrichtung ausgerichtet. Selbstverständlich ist auch eine Ausrichtung in Umfangsrichtung möglich. Daneben können die Teilkanäle auch beliebige andere Formen aufweisen, solange die Form aller Teilkanäle gleich ist.

Es ist auch möglich, dass die Kanalwand 16 und das Stauelement 15 eine gleichmäßige vieleckige Grundform haben. Auch in diesem Fall können mit einem Winkel beabstandete Teilkanäle 10 in das Stauelement 15 eingebracht werden, wobei der Winkelabstand so gewählt werden muss, dass die Symmetrie des durch die Kanalwand 16 gebildeten Vielecks durch die Anordnung der Teilkanäle 10 wiedergegeben wird.

Fig. 5 und Fig. 6 zeigen verschiedene Ausführungsbeispiele einer Beschleunigungseinrichtung eines Durchflussmessers. In Fig. 5 sind Kanäle 9 gezeigt, die durch Wände 16 beabstandet sind. Die Wände 16 sind senkrecht zur ursprünglichen Kanalrichtung des Kanals 9 parallel angeordnet und gleich geformt. Da sich im Abwinkelungsbereich 17 die Richtung aller Wände um einen Winkel α ändert, haben die Kanäle 9 nach dem Abwinkelungsbereich 17 eine Breite, die der ursprünglichen Breite der Kanäle 9 multipliziert mit dem Kosinus von α entspricht.

Alternativ oder ergänzend kann eine Beschleunigung der Fluidströmung, das heißt auch eine Verringerung der Kanalfläche, dadurch erfolgen, dass in einer Richtung Zwischenräume zwischen den Kanälen erzeugt werden. Dies wird dadurch erreicht, dass die Wände 21 zwischen den Kanälen 9, 11 in der Beschleunigungseinrichtung eine Y-Form aufweisen. Im Abschnitt vor der Beschleunigungseinrichtung 19 ist die Wand 21 als eine einzelne Wand ausgebildet, die zwischen den Kanälen 9 und 11 angeordnet ist. Im Bereich der Beschleunigungseinrichtung teilt sich diese Wand 21 in zwei Wandabschnitte auf, zwischen denen ein Zwischenraum 18 gebildet wird. Der Zwischenraum 18 kann gegenüber den Kanälen vollständig abgeschlossen sein, es ist aber auch möglich, dass die zwei Enden der Wand 21 frei in einem Kanal enden, wodurch ein Zwischenraum 18 gebildet wird, der in Strömungsrichtung hinter der Beschleunigungseinrichtung, vorzugsweise hinter dem Messbereich, offen ist. In diesem Fall findet nach der Durchflussmessung ein Flüssigkeitsaustausch des Zwischenraums mit den Kanälen 9, 11 statt. Um zu verhindern, dass ein stehendes Fluidvolumen im Zwischenraum 18 gebildet wird, wodurch Messungen bei einem Wechsel des Messgases verfälscht werden können, wird über die Öffnung 20 gereinigtes Fluid im Durchflussmesser eingebracht.

Fig. 7 und Fig. 8 zeigen verschiedene Ausführungsformen der Zusammenführungseinrichtung eines Durchflussmessers.

In Fig. 7 ist die Zusammenführung der Einzelkanäle 35, 36, 37 und 38 im Sammelkanal 34 gezeigt. Die Kanäle 35 und 36 sowie 37 und 38 sind durch eine Wand 23 beabstandet. Diese Kanalpaare werden bereits vor dem Ende der Wand 21 zusammengeführt. Zwischen den beiden Kanalpaaren ist ein Zwischenraum 18 angeordnet, der durch die Wand 21 begrenzt wird. Die Wand 21 ist durch das Verlängerungselement 39 asymmetrisch geformt, so dass die aus den Strömungen der Teilkanäle 35 und 36 gebildete Strömung und die aus den Strömungen der Teilkanäle 37 und 38 gebildete Strömung jeweils in die gleiche Richtung geführt werden. Dadurch werden zufällige Wandanhaftungseffekte verhindert.

Fig. 8 zeigt ein Ausführungsbeispiel das, um Wandanhaftungen oder semi-stabile Druckverteilungen zu verhindern, Verwirbelungselemente 24 nutzt. Bei der Zusammenführung von mehreren Kanälen kann es zu problematischen Wechselwirkungen zwischen den Strömungen dieser Kanäle kommen, die zu einer semi-stabilen Druckverteilung führen, bei der in unterschiedlichen Bereichen der Zusammenführungsstufe stark unterschiedliche Drücke herrschen. Dies kann dazu führen, dass einzelne Einzelkanäle 35, 36, 37, 38 höhere oder geringere Strömungswiderstände aufweisen. Um dies zu verhindern, kann beispielsweise das aus den Einzelkanälen 35, 36, 37 und 38 ausströmende Fluid verwirbelt werden. Die erzeugten Wirbelströmungen stören jede sich aufbauende semi-stabile Druckverteilung, wodurch eine gleichmäßige Druckverteilung erreicht wird. Das Fluid strömt also beispielsweise laminar durch die Kanäle 35, 36, 37, 38 zu den Verwirbelungselementen 24 und wird dort verwirbelt und als Wirbelströmung in den Sammelkanal 34 geführt.

Die Verwirbelungselemente weisen eine in Strömungsrichtung im Wesentlichen flache Oberfläche auf. Dadurch trifft die Strömung im Wesentlichen senkrecht auf die Verwirbelungselemente 24, wodurch eine Scherbewegung des Fluids erfolgt, die zu einer Verwirbelung führt. Die Verwirbelungselemente 24 im Querschnitt als Dreiecke ausgeführt.

Fig. 9 zeigt ein Ausführungsbeispiel einer Durchflussmesseranordnung, die einen Durchflussmesser 28 und eine Durchflussmesserattrappe 29 umfasst. Über den Kanal 25 einströmendes Fluid wird in einer Teileinrichtung 26 auf die Kanäle 27 gleichmäßig verteilt, wobei einer der Kanäle 27 dem Durchflussmesser 28 zugeführt wird und der andere der Kanäle 27 der Durchflussmesserattrappe 29. Da der Durchflussmesser 28 und die Durchflussmesserattrappe 29 abgesehen von der Messeinrichtung identisch aufgebaut sind, weisen der Durchflussmesser 28 und Durchflussmesserattrappe 29 auch die gleichen Strömungswiderstände auf. Es wird also erreicht, dass der Strömungswiderstand für beide Kanäle 27 insgesamt gleich ist, und somit eine gleichmäßige Verteilung des Fluids auf den Durchflussmesser 28 und der Durchflussmesserattrappe 29.

Eine gleichmäßige Verteilung des Fluids zwischen dem Durchflussmesser 28 und der Durchflussmesserattrappe 29 ist insbesondere mit den vorbeschriebenen Ausführungsformen für Teileinrichtungen und Zusammenführungseinrichtung möglich.

## Patentansprüche

1. Durchflussmesser für ein Fluid, umfassend eine Kanaleinheit, die die Kanäle (9, 11, 33) des Durchflussmessers ausbildet, wobei die Kanaleinheit in einem Messbereich mehrere Kanäle (9, 11, 33) aufweist und wenigstens in einem dieser Kanäle (9, 11, 33) wenigstens eine Messeinrichtung (12) angeordnet ist, wobei die Kanaleinheit eine Teileinrichtung (4) mit einer oder mehreren Teilstufen zur Aufteilung des in den Durchflussmesser einfließenden Fluids in die Kanäle (9, 11, 33) umfasst, wobei die oder jede Teilstufe wenigstens ein Stauelement (15) umfasst, das durch einen Einströmkanal (3) einströmendes Fluid in wenigstens zwei Teilkanäle (10) aufteilt, **dadurch gekennzeichnet, dass** die Teileinrichtung (4) und/oder eine Beschleunigungseinrichtung (8), die in wenigstens einem der Kanäle (9, 11, 33) zwischen Teileinrichtung (4) und Messbereich angeordnet ist, zur Beschleunigung des Fluids ausgebildet ist, derart, dass das Fluid vor der Teileinrichtung (4) eine erste Strömungsgeschwindigkeit aufweist und im Messbereich eine mindestens 1,5-fache, insbesondere eine mindestens doppelt so hohe, zweite Strömungsgeschwindigkeit.

2. Durchflussmesser nach Anspruch 1, **dadurch gekennzeichnet, dass** die Teilkanäle (10) jeder Teilstufe (4) im Wesentlichen gleiche Strömungswiderstände, und insbesondere auch gleiche Querschnittsgeometrien, aufweisen.

3. Durchflussmesser nach einem der vorangehenden Ansprüche, **dadurch gekennzeichnet, dass** in der Teilstufe (4) oder wenigstens einer der Teilstufen (4) wenigstens zwei der Teilkanäle (10) durch das Stauelement (15) beabstandet sind, wobei der Abstand der Teilkanäle (10) wenigstens dreimal so groß ist wie der Durchmesser eines der Teilkanäle (10).

4. Durchflussmesser nach einem der vorangehenden Ansprüche, **dadurch gekennzeichnet, dass** in der Teilstufe (4) oder wenigstens einer der Teilstufen (4) der Einströmkanal (3) im Wesentlichen rechteckig und seine Breite mindestens dreimal so groß wie seine Höhe ist, wobei das Stauelement (15) den Einströmkanal (3) in Breitenrichtung in wenigstens zwei, insbesondere wenigstens drei, Teilkanäle (10) unterteilt, wobei die Teilkanäle (10) vom Rand des Einströmkanals (3) in Breitenrichtung um wenigstens 10%, insbesondere wenigstens 15%, der Breite des Einströmkanals (3) beabstandet sind.

5. Durchflussmesser nach einem der Ansprüche 1 bis 3, **dadurch gekennzeichnet, dass** in der Teilstufe (4) oder wenigstens einer der Teilstufen (4) das Stauelement (15) den Einströmkanal (3) in wenigstens drei Teilkanäle (10) unterteilt, wobei die Teilkanäle (10) in mindestens zwei Ebene liegen, wobei insbesondere vorgesehen ist, dass die Teilstufe (4) in einer Schnittebene im Bereich des Stauelements (15) senkrecht zur Richtung des Einströmkanals (3) aus mindestens drei identischen Bereichen besteht, die je wenigstens einen Teilkanal (10) aufweisen.

6. Durchflussmesser nach Anspruch 5, **dadurch gekennzeichnet, dass** der Querschnitt des Einströmkanals (3) kreisförmig ist und die Teilstufe (4) mindestens drei in Umfangsrichtung des Einströmkanals (3) gleichmäßig beabstandete Teilkanäle (19) umfasst, oder dass der Querschnitt des Einströmkanals (3) rechteckig ist und die Teilstufe (4) genau vier Teilkanäle (10) umfasst.

7. Durchflussmesser nach einem der vorangehenden Ansprüche, **dadurch gekennzeichnet, dass** in der Teilstufe (4) oder wenigstens einer der Teilstufen (4) die Summe der Querschnittsflächen der Teilkanäle (10) kleiner ist als die Querschnittsfläche des Einströmkanals (3).

8. Durchflussmesser nach einem der vorangehenden Ansprüche, **dadurch gekennzeichnet, dass** die Querschnittsfläche zumindest eines der Kanäle (9, 11, 22, 33) hinter der Beschleunigungseinrichtung (8) kleiner ist als vor der Beschleunigungseinrichtung (8), wobei der Kanal im Bereich der Beschleunigungseinrichtung (8) eine im Wesentlichen rechteckige Form mit zwei Seitenwänden (16, 21), einem Boden und einer Decke aufweist, und dass die Beschleunigungseinrichtung (8) insbesondere ein Abwinkelungsbereich (17) ist, in dem sich die Richtung des Kanals (9, 11, 33) in die Richtung einer der Seitenwände (16, 21) ändert, wobei insbesondere die beiden Seitenwände (16, 21) im Abwinkelungsbereich (17) die gleiche Form aufweisen.

9. Durchflussmesser nach Anspruch 8, **dadurch gekennzeichnet, dass** wenigstens eine der Seitenwände (16, 21) vor der Beschleunigungseinrichtung (8) auch eine Seitenwand (16, 21) eines zweiten Kanals (11) bildet, und nach der Beschleunigungseinrichtung (8) der Kanal (9) und der zweite Kanal (11) in Richtung der Seitenwand (16, 21) durch einen Zwischenraum beabstandet sind, wobei insbesondere vorgesehen ist, dass sich der Boden und/oder die Decke auch im Bereich des Zwischenraums (18) fortsetzen und im Bereich des Zwischenraums (18) eine Öffnung (20) zum Einbringen von, insbesondere gereinigtem, Fluid aufweisen.

10. Durchflussmesser nach einem der vorangehenden Ansprüche, **dadurch gekennzeichnet, dass** die Kanaleinheit eine Zusammenführungseinrichtung (13) mit einer oder mehreren Zusammenführungsstufen zur Zusammenführung des durch die Kanäle (9, 11 33) des Messbereichs fließenden Fluids in einen Ausgangskanal (14) umfasst, wobei jede Zusammenführungsstufe (13) durch wenigstens zwei Einzelkanäle (35, 36, 37, 38) einströmendes Fluid in einen Sammelkanal (34) zusammenführt, wobei insbesondere vorgesehen ist, dass in der Zusammenführungsstufe oder einer der Zusammenführungsstufen die Einzelkanäle (35, 36, 37, 38) in einem Sammelkanal (34) mit größerem Durchmesser enden, wobei wenigstens einer der Einzelkanäle (35, 36, 37, 38) an seinem Ende ein Verlängerungselement (39) aufweist, das in einem Teil des Umfangs des Einzelkanals (35, 36, 37, 38) eine Verlängerung einer Seitenwand (16, 21) des Einzelkanals (35, 36, 37, 38) bildet.

11. Durchflussmesser nach Anspruch 10, **dadurch gekennzeichnet, dass** die Zusammenführungseinrichtung (13) mindestens ein Verwirbelungselement (23) zur Verwirbelung der Fluidströmung aufweist, wobei insbesondere vorgesehen ist, dass das Verwirbelungselement (23) auf der der Fluidströmung zugewandten Seite im Wesentlichen flach ist.

12. Durchflussmesser nach Anspruch 11, **dadurch gekennzeichnet, dass** die Einzelkanäle (35, 36, 37, 38) der Zusammenführungsstufe (13) oder wenigstens einer der Zusammenführungsstufen (13) im Übergangsbereich zum Sammelkanal (34) mindestens ein, insbesondere zwei Verwirbelungselemente (23) aufweisen.

13. Durchflussmesser nach einem der vorangehenden Ansprüche, **dadurch gekennzeichnet, dass** die Kanaleinheit wenigstens ein Fluidreservoir (2) umfasst, das vor der Teileinrichtung (4) und/oder nach wenigstens einer der Zusammenführungsstufen angeordnet ist.

14. Durchflussmesser nach einem der vorangegangenen Ansprüche, **dadurch gekennzeichnet, dass** die Länge wenigstens eines der Kanäle (9, 11, 33) mindestens dreimal, insbesondere mindestens fünfmal, so groß ist wie der Querschnitt des Kanals (9, 11, 33).

15. Durchflussmesser nach einem der vorangegangenen Ansprüche, **dadurch gekennzeichnet, dass** die Querschnittsfläche wenigstens eines der Kanäle (9, 11, 33) rechteckig oder rund ist, wobei insbesondere vorgesehen ist, dass das Höhe:Breite-Verhältnis mindestens eines der rechteckigen Kanäle (9, 11, 33) maximal 1:3, insbesondere maximal 1:5, speziell maximal 1:10 ist.

16. Durchflussmesser nach Anspruch 15, **dadurch gekennzeichnet, dass** mindesten einer der Kanäle (9, 11, 33) zwischen 0,7 mm und 1, 5 mm hoch ist.

17. Durchflussmesser nach einem der vorangehenden Ansprüche, **dadurch gekennzeichnet, dass** in mindestens einem der Kanäle (9, 11, 33) zusätzliche Stauelemente zur Erhöhung des Strömungswiderstands angeordnet sind.

18. Durchflussmesser nach einem der vorangehenden Ansprüche, **dadurch gekennzeichnet, dass** die mindestens eine Messeinrichtung im Messbereich aus einem Sensor oder einer Sensoranordnung besteht, welche eine Fluidgröße, insbesondere die Durchflussmenge, erfasst, wobei die Sensoranordnung insbesondere einen thermischen, speziell einen mikrothermischen, Sensor umfass oder der Sensor insbesondere ein thermischer, speziell ein mikrothermischen Sensor, ist, oder wobei die Sensoranordnung insbesondere einen Ultraschallsensor, speziell eine Ultraschallsensoreinheit nach dem Differenzlaufzeitverfahren, umfasst oder der Sensor insbesondere ein Ultraschallsensor, speziell eine Ultraschallsensoreinheit nach dem Differenzlaufzeitverfahren, ist.

19. Durchflussmesseranordnung, **dadurch gekennzeichnet, dass** sie wenigstens einen Durchflussmesser (28) nach einem der vorangehenden Ansprüche und wenigstens eine Durchflussmesseratrappe (29), die identisch zum Durchflussmesser (28) aufgebaut ist, außer, dass im Messkanal keine Messeinrichtung (12) angeordnet ist, umfasst, wobei eine zusätzliche Teileinrichtung (26) zur gleichmäßigen Verteilung eines Fluidstroms auf den Durchflussmesser (28) und die Durchflussmesseratrappe (29) ausgebildet ist und wobei eine zusätzliche Zusammenführungseinrichtung (30) zur Zusammenführung der Fluidströme des Durchflussmessers (28) und der Durchflussmesseratrappe (29) ausgebildet ist.
